(19) Europäisches Patentamt / European Patent Office / Office européen des brevets

(11) **EP 2 375 806 A1**

(12) **EUROPEAN PATENT APPLICATION**
published in accordance with Art. 153(4) EPC

(43) Date of publication:
**12.10.2011 Bulletin 2011/41**

(51) Int Cl.:
**H04W 28/06** (2009.01)     **H04W 92/04** (2009.01)

(21) Application number: **08878868.2**

(22) Date of filing: **15.12.2008**

(86) International application number:
**PCT/JP2008/003767**

(87) International publication number:
**WO 2010/070699 (24.06.2010 Gazette 2010/25)**

(84) Designated Contracting States:
**AT BE BG CH CY CZ DE DK EE ES FI FR GB GR HR HU IE IS IT LI LT LU LV MC MT NL NO PL PT RO SE SI SK TR**

(71) Applicant: **Fujitsu Limited**
**Kawasaki-shi, Kanagawa 211-8588 (JP)**

(72) Inventor: **YUKI, Shinji**
**Kawasaki-shi**
**Kanagawa 211-8588 (JP)**

(74) Representative: **Stebbing, Timothy Charles**
**Haseltine Lake LLP**
**Lincoln House, 5th Floor**
**300 High Holborn**
**London WC1V 7JH (GB)**

(54) **DATA TRANSMISSION METHOD**

(57)     A plurality of radio base stations constitute a radio communication system. Each of the radio base stations performs shaping control to output data in accordance with a shaping amount for adjusting a data transmission interval and transmits the output data to an upper-level apparatus. Each of the radio base stations performs shaping control by adjusting the shaping amount according to the number of mobile terminals which are performing radio communication and a QoS (Quality of Service) of a communication service being executed in a radio communication with the mobile terminal. The upper-level apparatus monitors data received from the radio base station, detects missing data, and transmits a control signal concerning the shaping control to the radio base station in accordance with the detection result of missing data. The radio base station performs the shaping control according to the received control signal.

FIG. 1

EP 2 375 806 A1

**Description**

FIELD

The present invention relates to a data transmission method in a radio communication system.

BACKGROUND

In the radio communication system such as W-CDMA (Wideband-Code Division Multiple Access) system and LTE (Long Term Evolution) system, a plurality of radio base stations constituting the system transfers data signals received from each mobile terminal located in the self-area to an upper-level apparatus. Typically, the upper-level apparatus is an base station control apparatus [RNC (Radio Network Controller) in the W-CDMA system, or aGW (access Gateway) in the LTE system] that controls the radio base station, and when a router is provided therebetween, the router is also included in the upper-level apparatus.

When transferring data signals, each radio base station transmits the data signals in burst at a transmittable rate in each wired channel bandwidth between with the upper-level apparatus. Therefore, if the total sum of data signal transmission rates from each radio base station temporarily exceeds the transfer rate of the upper-level apparatus, a portion of data signals are discarded in the upper-level apparatus, by which the loss of data occurs.

Since the data loss brings about the deterioration of transmission quality, in order to prevent deteriorated quality, retransmission control is performed in upper-level protocol layers (TCP and RLC layers) on the occurrence of the data loss, and thus, transmission quality guaranteed by transmission quality of service (QoS) is maintained.

The patent document 1 discloses a data transmission apparatus which monitors a delay in a cell buffer for awaiting transmission in a transmission interface when user data is assembled into a cell to forward to a transmission channel, and discards a cell if the delay in the cell buffer exceeds a tolerable amount. In the above data transmission apparatus, cell discard caused by the excess of tolerable delay in the buffer is prevented by weakening the burst characteristic by expanding the intervals of cell transmission to the transmission channel interface, particularly when data having an intense burst characteristic are to be transmitted at a low transmission channel speed.

Patent document 1: Japanese Laid-open Paten Publication No. 2002-232471.

However, the retransmission control by the upper-level protocols requires exchanging control signals between a radio base station and the upper-level apparatus thereof. Because a data signal once transmitted is retransmitted, the transmission speed is decreased if the retransmission control is carried out frequently. Moreover, a communication load is increased because it is necessary to buffer a data until its arrival is confirmed.

SUMMARY

Accordingly, it is an object of the present invention to provide a data transmission method that prevents the occurrence of data loss in a radio communication system having a plurality of radio base stations that are connected to upper-level apparatus and perform radio communication with mobile terminals.

According to an aspect of the invention, a data transmission method of a radio communication system having a plurality of radio base stations that are connected to an upper-level apparatus and perform radio communication with mobile terminals, includes: each radio base station performing shaping control to output data according to a shaping amount to adjust data transmission intervals, and each radio base station transmitting the output data to the upper-level apparatus.

According to an aspect of the invention, a radio base station for use in a radio communication system having a plurality of radio base stations, connected to an upper-level apparatus, performing radio communication with mobile terminals, the radio base station includes: a shaping controller for performing shaping control to output data buffered in a transmission buffer, according to a shaping amount to adjust data transmission intervals; and a transmitter for transmitting the output data to the upper-level apparatus.

According to an aspect of the invention, an upper-level apparatus for use in a radio communication system having a plurality of radio base stations, connected to the upper-level apparatus, performing radio communication with mobile terminals, the upper-level apparatus comprises: a receiver for receiving data from the radio base stations and buffering in a reception buffer; a missing data detector for detecting missing data by monitoring the data buffered in the reception buffer; and a shaping instruction unit for transmitting to the radio base station a signal relative to shaping control to adjust intervals of data transmission from the radio base station according to a shaping amount, based on the result of the missing data detection,.

BRIEF DESCRIPTION OF THE DRAWINGS

FIG. 1 is a diagram illustrating an exemplary configuration of the radio communication system according to the present embodiment.
FIG. 2 is a configuration diagram of an essential portion of the radio base station executing first shaping control.
FIG. 3 is a flowchart of shaping amount calculation processing in a shaping controller 214.
FIG. 4 is a diagram illustrating second shaping control.
FIG. 5 is a processing flowchart of the second shaping control.
FIG. 6 is a diagram illustrating an exemplary control signal format.
FIG. 7 is a diagram illustrating another exemplary configuration of the radio communication system.

DESCRIPTION OF EMBODIMENTS

Hereinafter, preferred embodiments of the present invention are described by reference to the drawings. However, it is to be understood that the exemplary embodiments depicted below do not intend to limit the technical scope of the present invention.

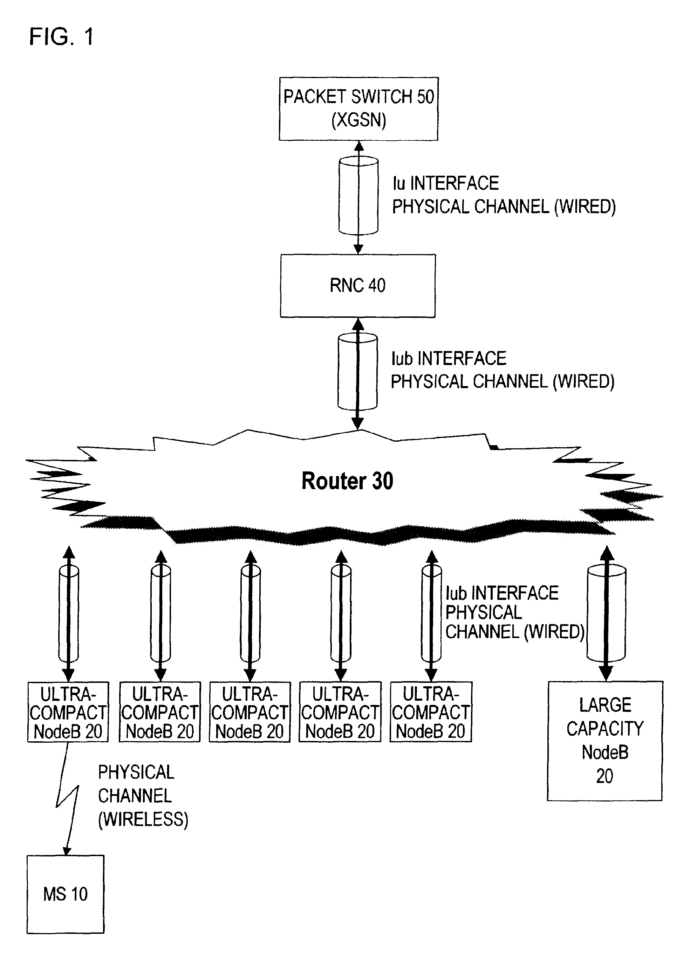

FIG. 1 is a diagram illustrating an exemplary configuration of the radio communication system according to the present embodiment. The exemplary configuration depicted in FIG. 1 is an exemplary configuration of W-CDMA (Wideband-Code Division Multiple Access) system. The radio communication system includes: a mobile terminal (MS) 10, a radio base station (NodeB) 20, a router 30, a base station control apparatus (RNC: Radio Network Controller) 40 and a packet switch (XGSN) 50. The router 30, the base station control (RNC) 40 and the packet switch (XGSN) 50 correspond to the upper-level apparatus of the radio base station 20.

The base station control apparatus (RNC) 40 has wired connections with a plurality of radio base stations 20 via the router 30, and each radio base station 20 transmits uplink signals, which are radio transmitted from the mobile terminal 10, to the base station control apparatus (RNC) 40.

In recent years, with regard to the radio base station 20, in addition to the radio base stations (large capacity NodeB) that covers relatively large areas, a configuration with a multiplicity of ultra-compact radio base stations (ultra-compact NodeB) each covering a relatively narrow area is being actualized so as to cover areas such as internal building and underground areas that the large capacity NodeB is hard to cover. If the multiplicity of ultra-compact NodeB (also referred to as femto BTS) are installed, the number of radio base stations subordinate to one base station control apparatus (RNC) increases. Because data signals are transmitted in a burst manner from each radio base station, though a data transmission amount from one ultra-compact NodeB is not large, if such data signals are simultaneously transmitted from the multiplicity of radio base stations, there is produced a high probability of a larger data amount than the maximum transfer rate of the upper-level apparatus (a router or a base station control apparatus) flowing into the upper-level apparatus. This may cause a risk that the occurrence frequency of data loss is increased.

According to the present embodiment, in order to prevent the occurrence of data loss, each radio base station 20 performs shaping control, in which a shaping amount, or a transmission interval time of the data signals, is adjusted. For example, by the increase of the shaping amount, a data transmission amount is smoothed, and data transmission in a burst manner is prevented. Also, by the reduction of the peak value of a transfer rate, the occurrence of data loss is prevented.

<First shaping control>

According to first shaping control, each radio base station 20 adjusts the shaping amount, based on both the number of mobile terminals 10, that are executing radio communication with the radio base station 20 of interest, and each QoS (Quality of Service) level of communication services executed in the radio communication between with the mobile terminal 10 of interest.

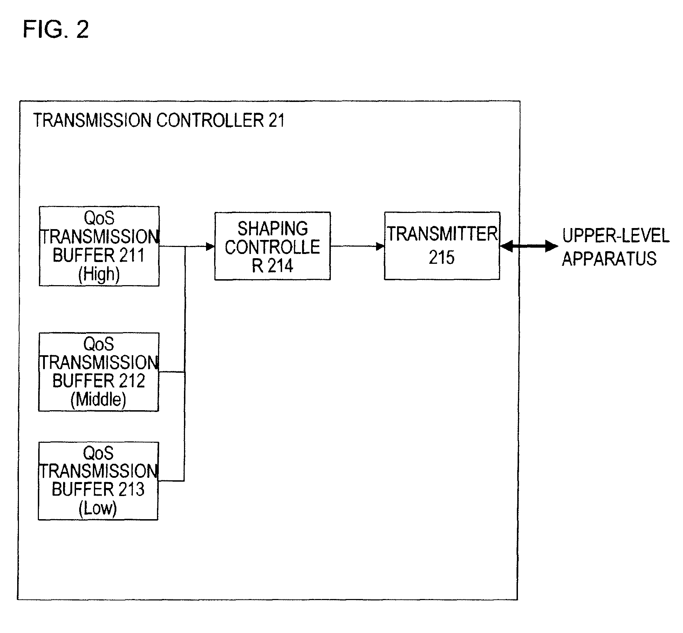

FIG. 2 is the configuration diagram of an essential portion of the radio base station 20 to implement the first shaping control. In FIG. 2, a case that three (3) QoS levels (high, Middle, Low) are set is depicted, as one example. High level is a level that provides a real time service such as voice communication. Middle level is a level that provides a service for dedicated channels (DCH), which has a lower priority of real time than the High level. Low level is a level that provides a best effort service by use of HSUPA (High Speed Uplink Packet Access) packets, which has a lower priority of real time than the High level and the Middle level. The categorization of the QoS levels is not limited to the above.

The transmission controller 21 in the radio base station 20 includes transmission buffers 211, 212, 213 each provided for each QoS, a shaping controller 214 and a transmitter 215. The buffer 211 is a memory for storing data signals having the High QoS level, and the buffer 212 is a memory for storing data signals having the Middle QoS level, and also, the buffer 213 is a memory for storing data signals having the Low QoS level.

The shaping controller 214 reads out data from each buffer according to the QoS, adjusts the shaping amount, and transmits to the transmitter 215 readout data according to transmission intervals adjusted by the shaping amount. The transmitter 215 transmits the received data signals to the upper-level apparatus.

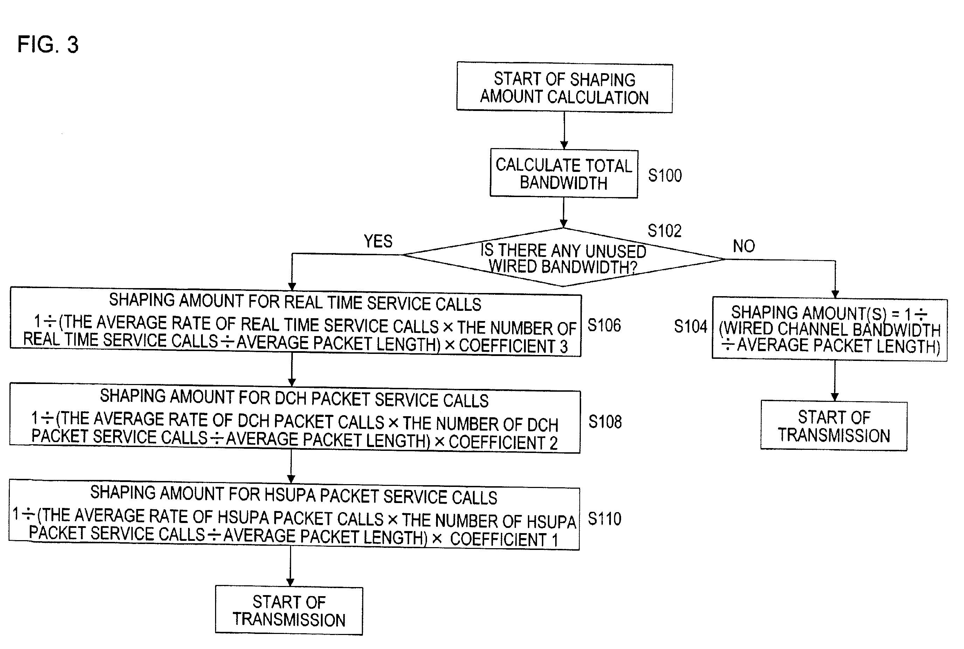

FIG. 3 is a flowchart of shaping amount calculation processing in the shaping controller 214. The shaping amount is calculated using the parameters depicted below.

(a) The number of calls in each QoS

- High: the number of real time service calls
- Middle: the number of DCH packet calls
- Low: the number of HSUPA calls

(b) Average rate for each QoS

- High: the average rate of real time service calls
- Middle: the average rate of DCH packet calls
- Low: the average rate of HSUPA calls

(c) Wired channel bandwidth
(d) Average packet length

The number of calls in each QoS is the number of users executing communication under the service of each QoS. The shaping controller 214 acquires call setup information in the application level, and counts the number of calls based on the call setup information. The average rate for each QoS is defined in the radio communication system. For example, in the W-CDMA system, the average rate of the real time service calls is 12.2 kbps, and the average rate of the DCH packet calls is 8 kbps. Also, the average rate of the HSUPA packet calls is determined according to the number of calls, because it is a service that shares a certain bandwidth with the number of calls. Further, the wired channel bandwidth (the maximum transfer rate of the upper-level apparatus) is also defined in the radio communication system. Moreover, in regard to the average packet length, a value defined in advance in the radio communication system is used.

Using the above-mentioned parameters, the shaping controller 214 calculates a shaping amount based on the processing steps depicted below. First, the shaping controller 214 calculates the total bandwidth of each QoS (S100). The total bandwidth is calculated from the following equation (1).

The total bandwidth = (the average rate of real time service calls × the number of real time service calls) + (the average rate of DCH packet service calls × the number of DCH service calls) + (the average rate of HSUPA packet

service calls × the number of HSUPA service calls) ... (1)

Next, the shaping controller 214 compares the calculated total bandwidth with the wired channel bandwidth, and decides whether or not the total bandwidth is smaller than the wired channel bandwidth (whether or not unused bandwidth exists in the wired channel bandwidth) (S102).

If the total bandwidth equals the wired channel bandwidth (i.e. no unused bandwidth exists in the wired channel bandwidth), the shaping controller 214 calculates the shaping amount based on the following equation (2) (S104).

Shaping amount (s) = 1 ÷ (wired channel bandwidth ÷ average packet length) ... (2)

If the total bandwidth equals the wired channel bandwidth, there is no room to expand the packet transmission interval, and the data signals (packets) are transmitted at closest transmission intervals obtained from equation (2). The shaping amount obtained from equation (2) is a common shaping amount to each QoS.

If the total bandwidth is smaller than the wired channel bandwidth (i.e. an unused bandwidth exists in the wired channel bandwidth), the shaping controller 214 calculates the shaping amount for each QoS, based on the following equations (3a)-(3c) (S106, S108, S110).

1) High QoS level

Shaping amount (s) = 1 ÷ ((the average rate of real time service calls × the number of real time service calls ÷ average packet length) × coefficient 3)    ... (3a)

2) Middle QoS level

Shaping amount (s) = 1 ÷ ((the average rate of DCH packet calls × the number of DCH packet service calls ÷ average packet length) × coefficient 2)    ... (3b)

3) Low QoS level

Shaping amount (s) = 1 ÷ ((the average rate of HSUPA packet calls × the number of HSUPA packet service calls ÷ average packet length) × coefficient 1)    ... (3c)

If the total bandwidth is smaller than the wired channel bandwidth, the shaping amount controller 214 calculates the shaping amount on each QoS basis, and expands the transmission intervals for each QoS so as to smooth the data transmission amount. The reason for obtaining the shaping amount on each QoS basis is that, if the shaping amount is calculated for the entire QoS in common, the transmission intervals become too much expanded, which may cause the possibility of not satisfying the requirement for the High QoS level to provide real time services, for example. Also, by taking into consideration the number of calls in each QoS, it is possible to obtain a most suitable shaping amount according to the data amount.

Additionally, the "coefficients" in each equation is a parameter to be set according to each QoS. As the coefficient is set greater, the shaping amount becomes smaller and the transmission interval becomes shorter. Therefore, by setting the coefficient corresponding to a higher level QoS greater, it is possible to raise the transmission priority of the higher level QoS. The numerical value of the coefficient is arbitrarily settable, and also, each coefficient for each QoS may have an identical value (including a case that the entire coefficients are 1).

A calculation example using typical numerical values is depicted below. Let each parameter be:

(a) The number of calls in each QoS

- High: the number of real time service calls = 100 users
- Middle: the number of DCH packet calls = 1,000 users
- Low: the number of HSUPA calls = 100 users

(b) Average rate for each QoS

- High: the average rate of real time service calls = 12.2 kbps
- Middle: the average rate of DCH packet calls = 8 kbps

- Low: the average rate of HSUPA packet calls = 32 kbps

(c) Wired channel bandwidth = 100 Mbps
(d) Average packet length = 1,500 oct.

then, the total bandwidth is:

$$\text{Total bandwidth} = 12.2 \text{ kbps} \times 100 \text{ users} + 8 \text{ kbps} \times 1000 \text{ users} + 32 \text{ kbps} \times 200 \text{ users} = 15.6 \text{ Mbps}$$

and since the obtained total bandwidth is smaller than the wired channel bandwidth, based on equations (3a), (3b) and (3c), the shaping amount for each QoS is calculated as follows.

(1) High QoS level

$$\text{Shaping amount (s)} = 1 \div ((12.2 \text{ kbps} \times 100 \text{ users} \div 1500 \text{ oct.}) \times \text{coefficient 3}) = 409 \text{ μs}$$

(2) Middle QoS level

$$\text{Shaping amount (s)} = 1 \div ((8 \text{ kbps} \times 1000 \text{ users} \div 1500 \text{ oct.}) \times \text{coefficient 2}) = 93 \text{ μs}$$

(3) Low QoS level

$$\text{Shaping amount (s)} = 1 \div ((32 \text{ kbps} \times 200 \text{ users} \div 1500 \text{ oct.}) \times \text{coefficient 1}) = 234 \text{ μs}$$

<Second shaping control>

According to second shaping control, if the upper-level apparatus side detects missing data in data signals received from the radio base station 20, the upper-level apparatus transmits a control signal relative to the shaping control to the radio base station 20. Based on the above control signal, the radio base station 20 adjusts the shaping amount.

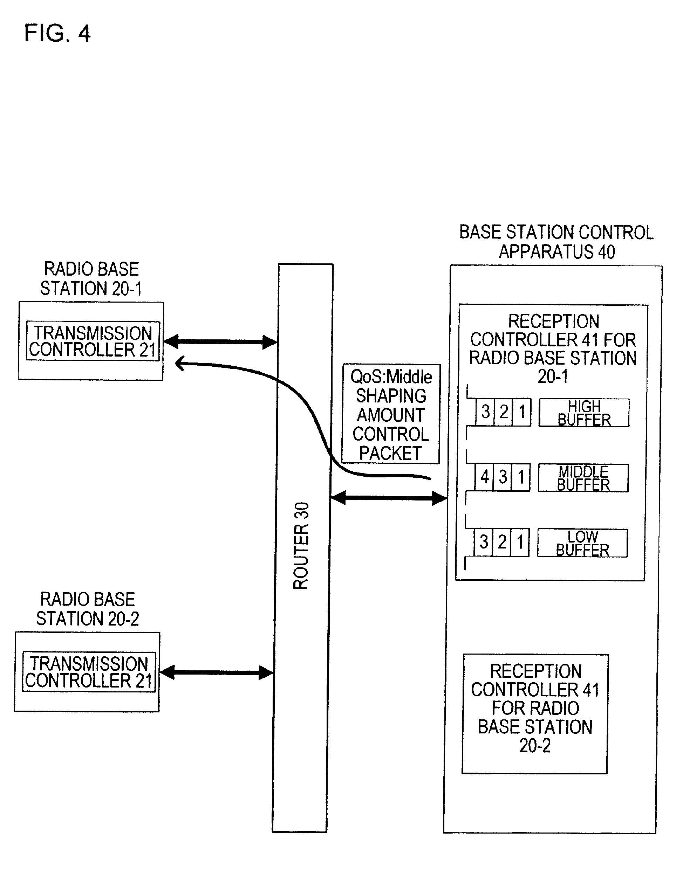

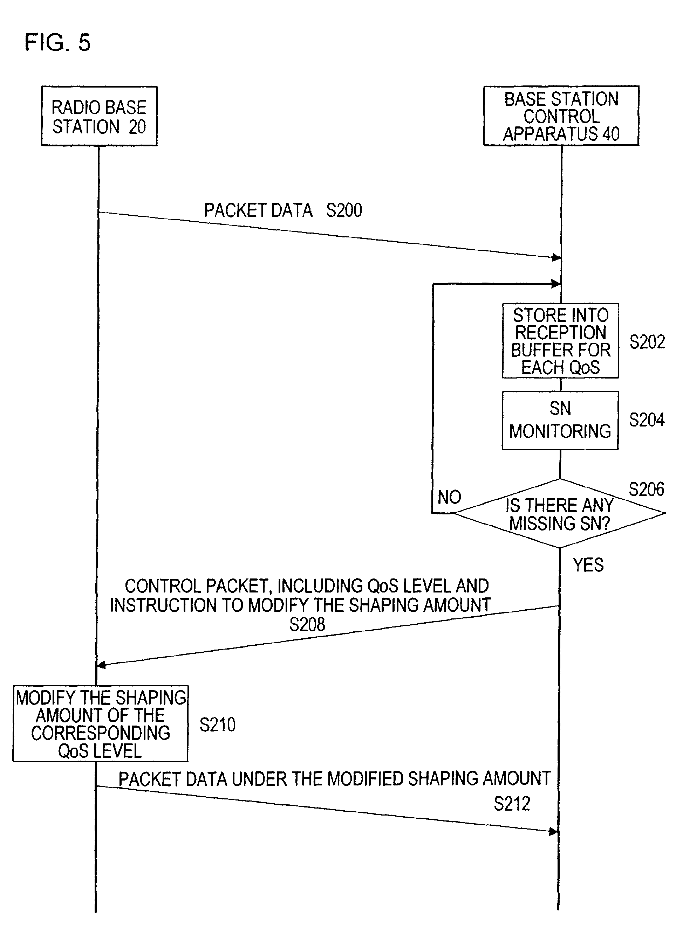

FIG. 4 is a diagram illustrating the second shaping control, in which the transmission of the control signal from the base station control apparatus (RNC) 40 to the base station (NodeB) 20, depicted in the exemplary configuration of FIG. 1, is schematically depicted. Also, FIG. 5 is a processing flowchart of the second shaping control. By reference to FIG. 4, description will be given in accordance with FIG. 5.

The base station control apparatus 40 receives data signals (packet data) from the plurality of radio base stations 20-i (I=1, 2 ...) via the router 30 (S200). The base station control apparatus 40 includes each reception controller 41 for each radio base station 20-i, and further, each reception controller 41 includes reception buffers (High buffer, Middle buffer and Low buffer in FIG. 4) provided for each QoS, and stores packet data on each QoS basis (S202).

The reception controller 41 monitors the sequence number (SN) of each packet data (S204), and decides the existence or non-existence of missing data (S206).

On detecting the missing data, the reception controller 41 transmits a control signal (control packet) to instruct to modify the shaping amount, to the radio base station 20-i in which the missing data occurs (S208). In the example depicted in FIG. 4, there occurs a missing data packet, having SN=2, of which QoS level is Middle, and accordingly, the control signal to instruct to modify the shaping amount is transmitted to the radio base station 20-1. The reception controller 41 functions as a missing data detector and a shaping instruction unit.

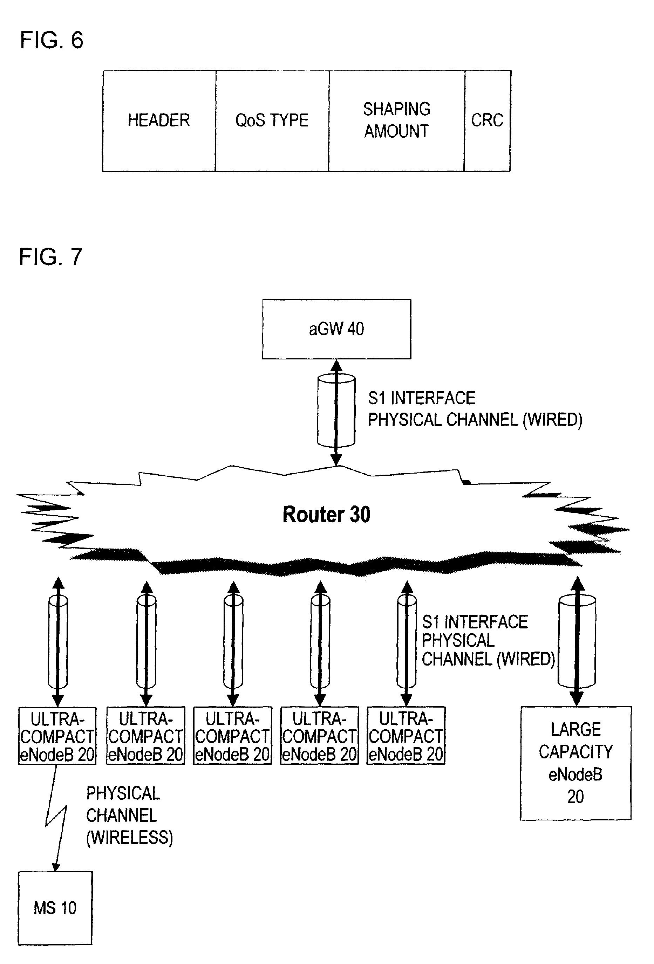

FIG. 6 is a diagram illustrating an exemplary control signal format. The header includes destination information, such as information to identify the radio base station 20. The QoS type includes information to specify QoS on which the shaping amount is to be modified. The QoS on which the shaping amount is to be modified is determined, for example, to be a QoS level in which the missing data has occurred. When the missing data occurs in a certain QoS level, if the shaping amount is uniformly modified to the entire QoS levels, it leads to the degradation of the service in a QoS level that provides the real time service. Therefore, the shaping amount is modified on each QoS basis. In the example depicted in FIG. 4, when the missing data occurs in the Middle QoS level, the Middle QoS level is designated.

The shaping amount includes information on the amount of modification of the shaping amount, having a fixed value of the order of 10 $\mu$s, for example. By increasing the shaping amount by a designated value, the data transmission intervals are expanded and the peak transfer rate is reduced, and thus, the occurrence of data loss is reduced. The control signal includes an error correction code such as CRC.

According to the control signal, the shaping controller 214 of the transmission controller 21 modifies the shaping amount of the designated QoS level (S210), and transmits data signals accordingly (S212).

As a deformation example of the processing depicted in FIG. 5, instead of one-time missing data detection in step S206, it may also be possible to configure to count the number of times of missing data occurrence on each QoS level basis, and to transmit the control signal when the missing data is detected a plurality of number of times.

In place of the modification amount of the shaping amount, the control signal may include the result of missing data detection [the missing data detection as many as the criterion number of times (one time or a plurality of times)], or information to instruct to modify the shaping amount. On receiving the control signal, the radio base station 20 modifies the shaping amount according to the modification amount of the shaping amount preset to the self-station.

Further, in regard to a QoS level on which the shaping amount is to be modified, it may also be possible to fix at a certain lower QoS level (the Low QoS level in the example depicted in FIG. 4), irrespective of the QoS level in which the missing data has occurred. Also, it may be possible to use any QoS level lower than the QoS level in which the missing data has occurred. By this, even when the missing data occurs in a higher QoS level, it is possible to prevent data loss while maintaining the QoS transmission quality.

Additionally, in the example depicted in FIG. 1, it is configured to detect a data loss, produced in the router 30, by the base station control apparatus 40 on the upper-level side. However, it may also be possible to provide the above shaping amount adjustment function in the router 30. Also, in case of a configuration without the intervention of the router 30, the present shaping adjustment function is applied in regard to a data loss produced in the self-base station control apparatus 40.

FIG. 7 is a diagram illustrating another exemplary configuration of the radio communication system. The exemplary configuration depicted in FIG. 7 indicates an exemplary configuration of an LTE radio communication system. The radio communication system includes a mobile terminal (MS) 10, a mobile base station (eNodeB: evolved NodeB) 20, a router 30 and a base station control apparatus (aGW: access Gateway) 40. The router 30 and the base station control apparatus (aGW) 40 correspond to the upper-level apparatus of the radio base station 20. The aforementioned present embodiment is also applicable to the exemplary configuration depicted in FIG. 7, and further, it is to be noted that a radio communication system to which the data transmission method according to the present embodiment is to be applied is not limited to the exemplary configurations depicted in FIG. 1 and FIG. 7.

The present method is applicable to radio communication systems such as W-CDMA systems and LTE systems. According to the present data transmission method, it is possible to prevent the occurrence of data loss in data signals transmitted from the radio base station to the upper-level apparatus.

**Claims**

1.   A data transmission method in a radio communication system having a plurality of radio base stations, connected to upper-level equipment, performing radio communication with mobile terminals,
     wherein each radio base station performs shaping control to output data according to a shaping amount to adjust data transmission intervals, so as to transmit to the upper-level equipment.

2.   The data transmission method according to claim 1,
     wherein the shaping amount is set on the basis of the number of mobile terminals presently executing radio communication and each QoS (Quality of Service) level of communication services presently executed in the radio communication with the mobile terminals.

3.   The data transmission method according to claim 2,
     wherein, as the shaping amount, for each QoS level of the communication services presently in execution, the reciprocal of a value obtained by dividing a product between an average rate and the number of calls in each communication service by an average number of packets in each communication service is calculated and used.

4. The data transmission method according to claim 2,
wherein, as the shaping amount, for each QoS level of communication services presently in execution, the reciprocal of a value obtained by multiplying each coefficient, which is set according to each QoS level, by a value obtained by dividing a product between an average rate and the number of calls in each communication service by an average number of packets in each communication service is calculated and used.

5. The data transmission method according to claim 4,
wherein, for each QoS level of the communication services presently in execution, each coefficient is set greater as the QoS level is higher.

6. The data transmission method according to claim 4 or 5,
wherein each coefficient is set within a range of the total bandwidth of the entire services presently in execution not exceeding wired channel bandwidth between the radio base station and the upper-level equipment.

7. The data transmission method according to either one of claims 1 to 6,
wherein the shaping control is performed when the total bandwidth of the entire communication services presently in execution is smaller than the wired channel bandwidth between the radio base station and the upper-level equipment.

8. The data transmission method according to either one of claims 1 to 7,
wherein the upper-level equipment detects missing data by monitoring data received from the radio base station, and according to the result of the missing data detection, transmits a signal relative to the shaping control to the radio base station, and
wherein the radio base station performs the shaping control based on the received signal.

9. The data transmission method according to either one of claims 2 to 7,
wherein the upper-level equipment detects missing data for each QoS level by monitoring data received from the radio base station, and transmits a signal relative to the shaping control to the radio base station presently executing a predetermined communication service corresponding to the QoS level in which the missing data detection reaches a predetermined value or more, among the radio base stations.

10. The data transmission method according to claim 9,
wherein the upper-level equipment transmits the signal to the radio base station presently executing a communication service having a level identical to the QoS level in which the missing data detection reaches a predetermined value or more, among the radio base stations.

11. The data transmission method according to claim 9,
wherein the upper-level equipment transmits the signal to the radio base station presently executing a communication service having a level lower than the QoS level in which the missing data detection reaches a predetermined value or more, among the radio base stations.

12. The data transmission method according to either one of claims 8 to 11,
wherein, as the signal relative to the shaping control, the upper-level equipment transmits the signal indicative of the result of the missing data detection, and the radio base station executes the shaping control when the missing data detection reaches a predetermined value or more.

13. The data transmission method according to either one of claims 8 to 11,
wherein, as the signal relative to the shaping control, the upper-level equipment transmits the signal to instruct the execution of the shaping control, when the missing data detection reaches a predetermined value or more, and
wherein, in response to the reception of the signal, the radio base station executes the shaping control.

14. The data transmission method according to either one of claims 8 to 11,
wherein, as the signal relative to the shaping control, the upper-level equipment transmits the signal to instruct the modification of the shaping amount, and
wherein, in response to the reception of the signal, the radio base station increases or decreases the shaping amount using a preset predetermined amount.

**15.** The data transmission method according to either one of claims 8 to 11,
wherein, as the signal relative to the shaping control, the upper-level equipment transmits the signal to instruct the modification amount of the shaping amount, and
wherein, in response to the reception of the signal, the radio base station increases or decreases the shaping amount using the modification amount.

**16.** A radio base station for use in a radio communication system having a plurality of radio base stations, connected to upper-level equipment, performing radio communication with mobile terminals, the radio base station comprising:

a shaping controller for performing shaping control to output data buffered in a transmission buffer, according to a shaping amount to adjust data transmission intervals; and
a transmitter for transmitting the output data to the upper-level equipment.

**17.** Upper-level equipment for use in a radio communication system having a plurality of radio base stations, connected to the upper-level equipment, performing radio communication with mobile terminals, the upper-level equipment comprising:

a receiver for receiving data from the radio base stations and buffering in a reception buffer;
a missing data detector for detecting missing data by monitoring the data buffered in the reception buffer; and
according to the result of the missing data detection, a shaping instruction unit for transmitting to the radio base station a signal relative to shaping control so as to adjust intervals of data transmission from the radio base station according to a shaping amount.

**18.** A radio communication system having a plurality of radio base stations, connected to upper-level equipment, performing radio communication with mobile terminals,
wherein each radio base station includes:

a shaping controller for performing shaping control to output data buffered in a transmission buffer, according to a shaping amount to adjust data transmission intervals; and
a transmitter for transmitting the output data to the upper-level equipment, and
wherein the upper-level equipment receives the data transmitted from the radio base station, so as to buffer the data in a reception buffer.

FIG. 1

FIG. 2

TRANSMISSION CONTROLLER 21

QoS TRANSMISSION BUFFER 211 (High)

QoS TRANSMISSION BUFFER 212 (Middle)

QoS TRANSMISSION BUFFER 213 (Low)

SHAPING CONTROLLER 214

TRANSMITTER 215

UPPER-LEVEL APPARATUS

FIG. 3

```
                            ┌─────────────────────┐
                            │  START OF SHAPING   │
                            │ AMOUNT CALCULATION  │
                            └─────────────────────┘
                                      │
                                      ▼
                            ┌─────────────────────┐
                            │  CALCULATE TOTAL    │ S100
                            │     BANDWIDTH       │
                            └─────────────────────┘
                                      │
                                      ▼                 S102
                    YES      ◇ IS THERE ANY UNUSED ◇        NO
          ┌──────────────────   WIRED BANDWIDTH?    ──────────────────┐
          ▼                                                           ▼
┌──────────────────────────────────────────┐          ┌──────────────────────────────┐
│ SHAPING AMOUNT FOR REAL TIME SERVICE CALLS│          │ SHAPING AMOUNT(S) = 1 ÷       │
│ 1÷(THE AVERAGE RATE OF REAL TIME SERVICE  │ S106  S104│ (WIRED CHANNEL BANDWIDTH     │
│ CALLS × THE NUMBER OF REAL TIME SERVICE   │          │ ÷ AVERAGE PACKET LENGTH)      │
│ CALLS ÷ AVERAGE PACKET LENGTH) × COEFFICIENT 3│      └──────────────────────────────┘
└──────────────────────────────────────────┘                        │
          │                                                          ▼
          ▼                                               ┌────────────────────┐
┌──────────────────────────────────────────┐             │     START OF       │
│ SHAPING AMOUNT FOR DCH PACKET SERVICE CALLS│            │   TRANSMISSION     │
│ 1÷(THE AVERAGE RATE OF DCH PACKET CALLS × │ S108        └────────────────────┘
│ THE NUMBER OF DCH PACKET SERVICE CALLS ÷  │
│ AVERAGE PACKET LENGTH) × COEFFICIENT 2    │
└──────────────────────────────────────────┘
          │
          ▼
┌──────────────────────────────────────────┐
│ SHAPING AMOUNT FOR HSUPA PACKET SERVICE CALLS│
│ 1÷(THE AVERAGE RATE OF HSUPA PACKET CALLS ×│ S110
│ THE NUMBER OF HSUPA PACKET SERVICE CALLS ÷│
│ AVERAGE PACKET LENGTH) × COEFFICIENT 1    │
└──────────────────────────────────────────┘
          │
          ▼
┌────────────────────┐
│     START OF       │
│   TRANSMISSION     │
└────────────────────┘
```

EP 2 375 806 A1

## FIG. 4

RADIO BASE STATION 20-1

TRANSMISSION CONTROLLER 21

ROUTER 30

QoS:Middle SHAPING AMOUNT CONTROL PACKET

BASE STATION CONTROL APPARATUS 40

RECEPTION CONTROLLER 41 FOR RADIO BASE STATION 20-1

| 3 | 2 | 1 | HIGH BUFFER |

| 4 | 3 | 1 | MIDDLE BUFFER |

| 3 | 2 | 1 | LOW BUFFER |

RADIO BASE STATION 20-2

TRANSMISSION CONTROLLER 21

RECEPTION CONTROLLER 41 FOR RADIO BASE STATION 20-2

FIG. 5

FIG. 6

| HEADER | QoS TYPE | SHAPING AMOUNT | CRC |
|--------|----------|----------------|-----|

FIG. 7

<table>
<tr><td colspan="2" align="center">**INTERNATIONAL SEARCH REPORT**</td><td>International application No.<br>PCT/JP2008/003767</td></tr>
</table>

| A. CLASSIFICATION OF SUBJECT MATTER |
|---|
| *H04W28/06* (2009.01) i, *H04W92/04* (2009.01) i |
| According to International Patent Classification (IPC) or to both national classification and IPC |

| B. FIELDS SEARCHED |
|---|
| Minimum documentation searched (classification system followed by classification symbols)<br>H04B7/24-7/26, H04W4/00-99/00 |
| Documentation searched other than minimum documentation to the extent that such documents are included in the fields searched<br>Jitsuyo Shinan Koho 1922-1996 Jitsuyo Shinan Toroku Koho 1996-2009<br>Kokai Jitsuyo Shinan Koho 1971-2009 Toroku Jitsuyo Shinan Koho 1994-2009 |
| Electronic data base consulted during the international search (name of data base and, where practicable, search terms used) |

| C. DOCUMENTS CONSIDERED TO BE RELEVANT | | |
|---|---|---|
| Category* | Citation of document, with indication, where appropriate, of the relevant passages | Relevant to claim No. |
| X<br>A | JP 2002-232471 A (Matsushita Electric Industrial Co., Ltd.), 16 August, 2002 (16.08.02), Par. No. [0034] (Family: none) | 1,16,18<br>2-15,17 |
| X<br>A | JP 2007-235932 A (NEC Saitama, Ltd.), 13 September, 2007 (13.09.07), Par. Nos. [0069] to [0076] (Family: none) | 1,16,18<br>2-15,17 |
| A | JP 2007-159052 A (NTT Docomo Inc.), 21 June, 2007 (21.06.07), Full text (Family: none) | 1-18 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>09 January, 2009 (09.01.09) | Date of mailing of the international search report<br>20 January, 2009 (20.01.09) |
|---|---|
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

International application No.

PCT/JP2008/003767

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2008-529381 A  (Nokia Corp.),<br>31 July, 2008 (31.07.08),<br>Full text<br>& US 2006/0176810 A1    & EP 1851920 A<br>& WO 2006/085184 A1 | 1-18 |

Form PCT/ISA/210 (continuation of second sheet) (April 2007)

**EP 2 375 806 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002232471 A